# EUROPEAN PATENT SPECIFICATION

(11) **EP 1 405 694 B1**
(45) Date of publication and mention of the grant of the patent: **06.06.2007**
(21) Application number: 03077998.7
(22) Date of filing: 23.09.2003
(51) Int. Cl.: B23Q 1/54, B23Q 1/66, B23Q 7/14

(54) **Pallet changing device for machine tools with tilting table**
Palettenwechsler für Werkzeugmaschinen mit einem Schwenktisch
Changeur de palette pour machines-outils avec une table basculante

(30) Priority: 02.10.2002 IT mi20022082
(43) Date of publication of application: 07.04.2004
(73) Proprietor: Mandelli Sistemi SPA, 29100 Piacenza (IT)
(72) Inventor: Ferrari, Giuseppe, 29010 Sarmato Piacenza (IT); Tagliaferri, Emanuele, 29100 Piacenza (IT)
(74) Representative: Dragotti, Gianfranco

(56) References cited:
- US-A- 5 992 608

## Description

The invention relates to devices which are used in machine tools and in machining centres in general, to move the workpiece support planes also known as "pallets" in the industry; therefore this term which is already well-established and widespread, will be used hereafter.

More specifically, the invention relates to devices of the automatic type often abbreviated as "APC" (Automatic Pallet Changer), which carry out the function of loading/unloading processed workpieces and those to be processed, arranged on pallets.

These devices are substantially constituted by a pair of horizontal forks extending from opposite sides of a central support mechanism, on which respective pallets are placed; the mechanism rotates the forks about a vertical axis, inverting the position thereof by rotation through 180°, following which a pallet that was on the fork directed towards the outside of the machine is moved inside, and vice versa.

Devices of this type are known from Japanese patents Nos. 4-105834 (in the name of Hamai Sangiyou) and 9-136236 (Hitachi), and from U.S. patent No. 5,992,608 (Ahn): however, they have configurations which limit their possibilities of use.

Indeed, when workpieces of large dimensions are to be processed or in the case of compact machine tools, i.e. where the distance between the forks and the position in which the workpiece is processed is limited, the forks extend into the operating zone, giving rise to a series of difficulties.

First of all it should be noted that the presence of the forks is incompatible with the movements of the table where the pallet is loaded, if the table is of the tilting type like for example that referred to in European patent application No. 1 080 828, in the name of Mori Seiki.

Indeed it can be appreciated that in such a situation the two arms of the fork which extend horizontally, would impede the tilting movements of the table.

Another disadvantage caused by the presence of the forks in the work zone, consists in that the shavings produced during the processing are deposited on the forks and therefore cannot be correctly removed; in addition, the excessive accumulation of shavings can, over time, be the cause of malfunctions of the forks or lead to difficulties during pallet changing operations. In order to overcome the difficulties set out above, pallet changing devices have been developed in which the forks are provided with arms that can be opened wide, i.e. that can rotate in their plane, in order to move them away from the work zone with a movement similar to that of scissors.

However, a solution of this type is not very suitable for processing heavy workpieces because the weight of the workpieces is supported only by the articulations of the arms of the forks, thus necessitating a mechanical over-dimensioning of the structure which can sometimes be excessive.

Alternatively it is possible to use pallet changing devices other than those having the forks, provided with slides or carriages movable along guides extending between the machine tool and the pallet loading station: this fact substantially increases the time for changing operations and therefore the whole processing time.

The present invention aims at overcoming the disadvantages encountered in the above-mentioned prior art.

That is to say, the object of the invention is to provide a pallet changing device with forks, which has a high loading capacity and in which the forks can be moved away from the work zone in order not to interfere with the movements of the workpiece-carrying table, in particular in the case of a table of the tilting type.

This object is achieved by a device wherein the forks can be folded with respect to a horizontal axis; in fact, this configuration allows the forks to be rotated until they are brought into a vertical plane, thereby eliminating any obstruction arising therefrom not only in the work zone, but also in the zone of loading and unloading pallets.

Furthermore, in accordance with a preferred embodiment of the invention, the forks are provided with levers on which actuating means can operate. The actuating means controls the folding of the forks and compensate for the weight of the load placed on the pallet: this allows to have a lighter structure of the forks with respect to the loads which it is able to support.

The specific features of the invention are set out in the appended claims; they will be better understood from the example given below with reference to the appended drawings, wherein:
- Figure 1 is an axonometric view of a machine tool according to the invention;
- Figure 2 is a detailed view of the pallet changing device of the machine tool of Figure 1;
- Figure 3 is a front view of the device of Figure 2;
- Figure 4 is a view similar to the preceding one, with the device being partially sectioned;
- Figure 5 is a section of the device, taken along line V-V of Figure 3;
- Figure 6 is a detailed view of the upper part of the device of the preceding Figures.

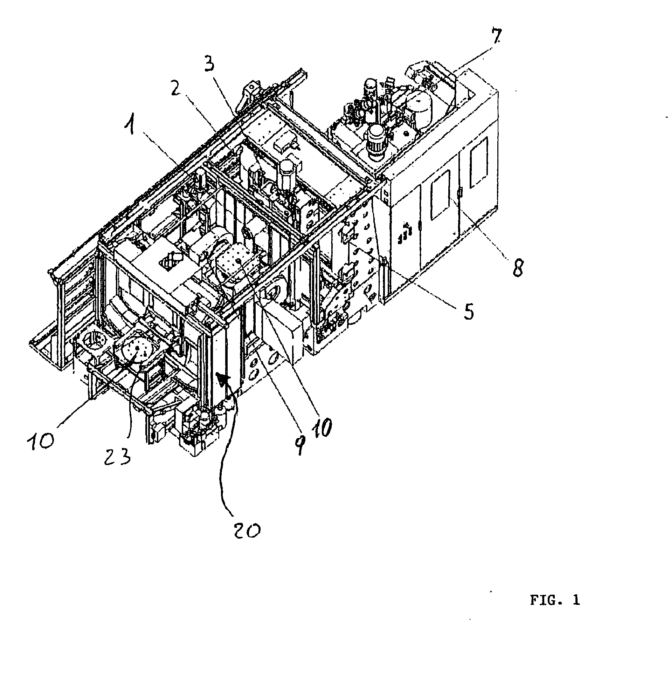

With reference to the drawings, Figure 1 is a top view of a machine tool for chip-forming machining, in which a spindle 1 having a horizontal axis X, is supported so as to be translatable along axes Y and Z of a Cartesian tern lying in a vertical plane, by means of a system of slides 2 and guides 3 known per se which are arranged on a portal type support structure 5.

In figure 1, behind the structure there is shown processing unit 7 of a liquid for cooling and disposing the chips, and an electrical control panel 8, whereas the work table 9 on which the pallet 10 with the workpiece is positioned, is located in front of the spindle 1.

The table 9 can pivot in a known manner about an axis transverse to that of the spindle 1 and can also move off and towards the spindle 1 (along guides which are not shown in the drawings), between an operating position wherein a workpiece loaded on the table 9 is processed by the tool, and a non-operating position remote from the spindle 1, wherein the replacement of the pallets 10 by means of the device 20 is carried out.

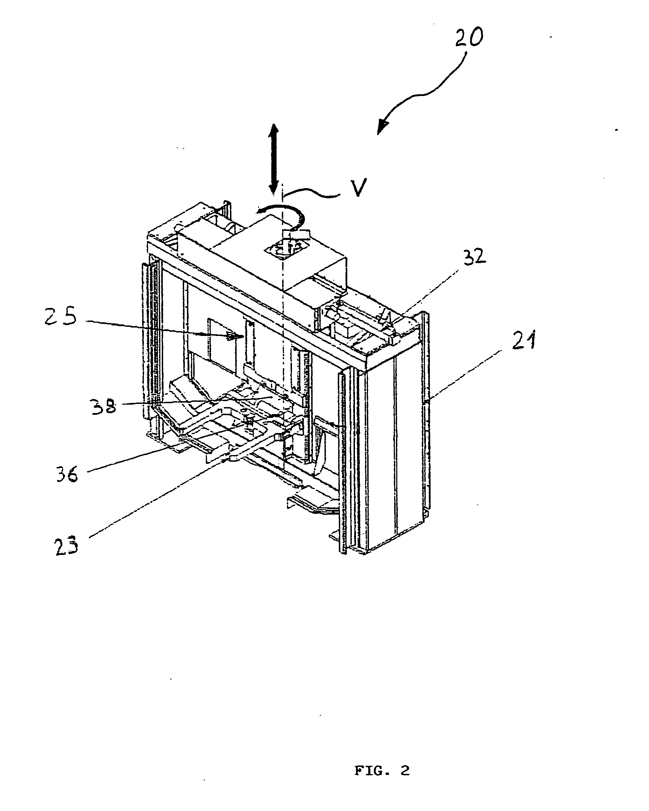

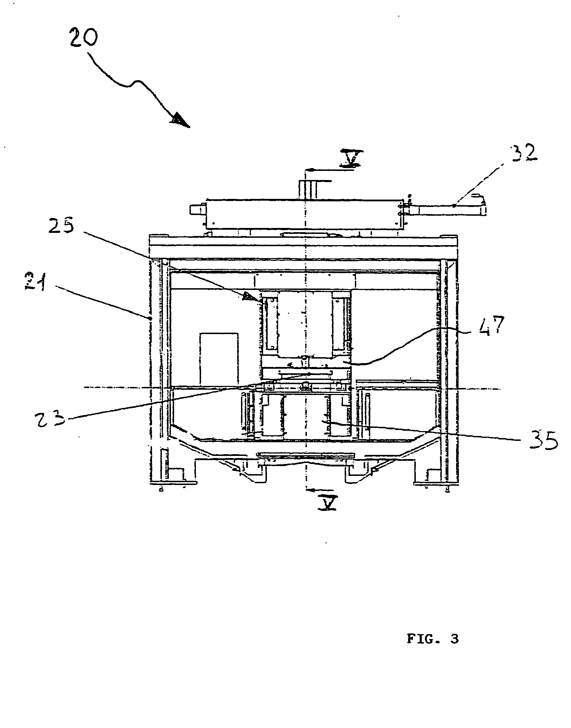

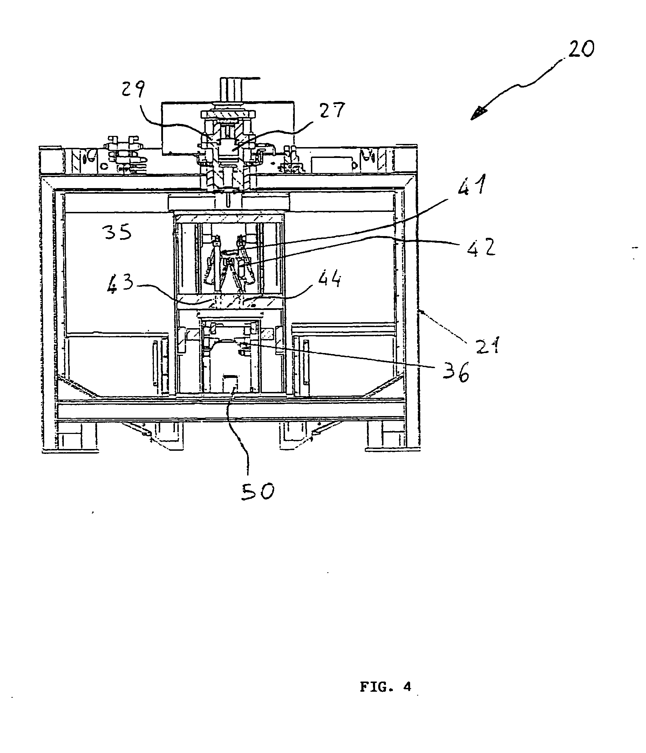

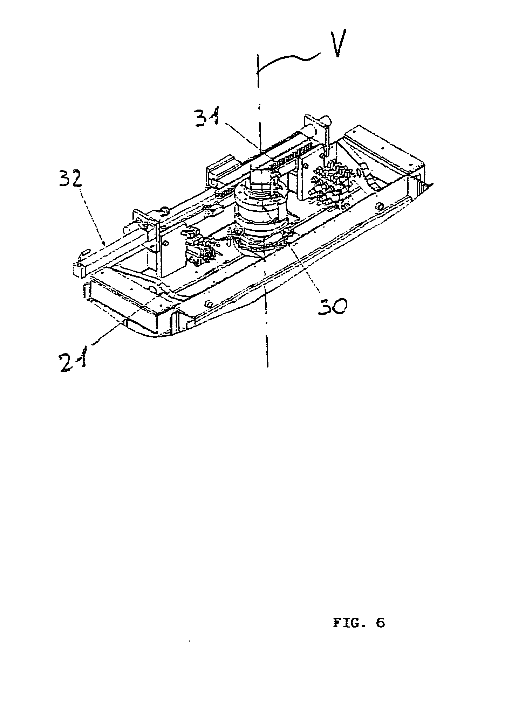

The device 20 is shown separately in Figures 2 to 6 and, as can be seen, it comprises a general support frame 21 on which forks 23 and 24 are located at opposite sides of a central assembly 25 for their operation and support.

The assembly 25 comprises a hollow shaft 27 which is mounted on bearings inside a hydraulic cylinder 29, so as to be able to rotate about its own axis; a toothed wheel 30 is mounted at the upper end of the shaft 27 so that the latter can slide axially relative to the wheel, as a result of its vertical movements according to what will be further explained below.

The axial sliding of the shaft 27 can be brought about in any known manner, for example with a splined joint or others; the hollow configuration of the shaft 27 allows the various tubes for the operating fluids and the supply lines of the components of the device, to extend through the shaft 27 as will be explained below. The toothed wheel 30 engages with a rack 31 which is positioned in the upper zone of the frame 21 and which is moved longitudinally by a hydraulic actuator 32 so that, as a result of its translations, the toothed wheel 30 is caused to rotate together with the hollow shaft 27, about a vertical axis V.

At the lower end the shaft 27 supports a base 35, to which the forks 23, 24 are articulated on respective assembly pins; the base 35 of the support assembly 25 also houses the various members involved in the folding of the forks 23, 24.

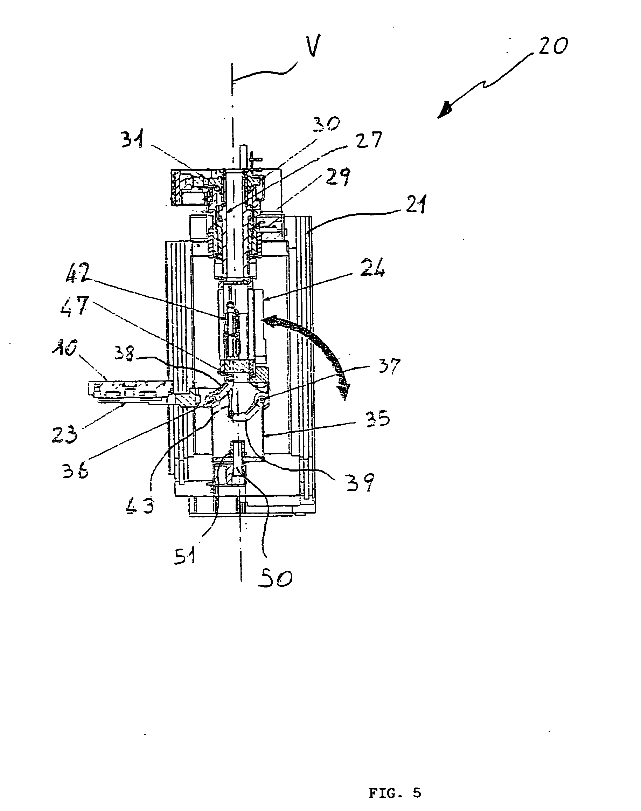

Indeed the forks 23, 24 can be folded relative to the assembly pins 36, 37 thereof between a horizontal position for loading pallets and a vertical position, in which they are moved near the base 35; Figure 5 shows the fork 23 in the horizontal state with a pallet 10 loaded thereon, while the fork 24 is arranged vertically in order to stay within the dimensions of the base 35.

In this embodiment of the invention, levers 38 and 39 advantageously extend from the opposite side of the forks, with respect to pins 36, 37.

These levers are connected to respective hydraulic jacks 41 and 42 which control the rotation of the forks from the horizontal state to the vertical state, and vice versa, in accordance with the operating phase of the pallet changing device; for this purpose, the translating shanks 43, 44 of the jacks extend through a cross-member 47 which is fixed to the base 35 of the assembly.

This cross-member acts as a travel limiting stop for the movement of the levers 38 and 39, when the respective fork 23, 24 is located in the horizontal loading state; this situation corresponds to that shown in Figure 5 for the fork 23.

On the other hand, in the vertical state of the forks, the shank 43, 44 of the relevant jack 41, 42 extends downwards beyond the cross-member 47, pressing the corresponding lever 38, 39; this situation is that of the fork 24 to the right in Figure 5, where the arrow indicates the folding rotation thereof.

The lifting and lowering movements of the central assembly 25 are guided in the lower region by a pin 50 on the frame 21, which pin 50 is coupled with a cylindrical sleeve 51 provided on the underside of the base 35 of the above-mentioned assembly.

From the foregoing it can understood The operation of the device 20 for changing pallets in the machine tool of Figure 1.

Indeed, the new pallets 10 with a workpiece to be processed are loaded on the fork which, at that moment, is directed towards the exterior of the machine (the fork indicated 23 in Figure 1).

After loading the pallet, the central assembly 25 is lifted and rotated through 180° by activating the hydraulic cylinder 29 and the rack 32 which engages with the toothed wheel 30: this is made possible by the axial sliding of the hollow shaft 27 relative to the above-mentioned wheel.

Once the rotation is completed, the central assembly is lowered so that the pallet with the workpiece to be processed, can be put down on the work table 9 which is in the non-operating position remote from the spindle; at the same time, the pallet with the workpiece just processed can be removed from the other fork, which is now on the outside, in order to load a new workpiece.

At this point the work table 9 with the pallet loaded thereon is caused to advance towards the spindle 1, in order to start a new machining operation; the fork on which the pallet has been placed is moved into the vertical position, by operating the relevant jack 41 or 42.

The jack is retracted when the machining is complete so that the fork returns to the horizontal state ready to receive once again the pallet with the processed workpiece, which is moved backwards by the table 9.

At this point the central assembly is lifted again and rotated through 180° in order to begin a new operating cycle, as referred to above.

As it can be appreciated, the pallet changing device 20 allows the disadvantages encountered in the prior art to be overcome.

First of all it is evident that the capability of folding the forks 23 and 24 vertically prevents any interference with the movements of the work table 9, even in the case of a tilting table as in the embodiment considered.

This result is obtained without any substantial increase in the dimensions of the device; in fact, the elements intended to bring about the folding of the forks, are all housed in the central support assembly 25 of the forks themselves, which also serves to rotate them through 180° about the vertical axis.

In this context it should be noted that the two jacks 41 and 42 are of small dimensions because they are used only to rotate the forks from the vertical condition to the horizontal condition and vice versa, when the forks are unloaded (that is to say, without pallets); therefore, they have to contrast solely the weight of the forks and not that of the pallet or of a workpiece as well.

It should be pointed out in particular that the use of the levers 38 and 39 allows important advantages to be obtained.

For example, there are no elements (such as hydraulic cylinders, mechanisms, etc.) which serve to fold the forks and which protrude from the plane defined by them; this allows the loading of a pallet on the forks not to be obstructed or limited, even for workpieces having large dimensions.

Indeed if actuators along the sides of the forks and the central assembly (likewise the articulations of common collapsible tables) were used in order to bring about the folding of the forks, difficulties could arise in the case of workpieces which project from the pallet.

On the contrary, it can be appreciated that, since the levers are located beyond the folding axis of the forks, they do not limit in any way the loading plane of the pallets.

It should be further emphasised how, in the horizontal state of the forks, the levers 38 and 39 allow the weight of the pallet with the workpiece loaded thereon to be balanced without requiring excessive dimensions of the various members involved.

This is due to the fact that the force to be applied to the levers is definitely less than that required by any other type of system for stopping the forks 23 and 24, operating in the region of the articulation pins thereof.

Furthermore, the particular solution of the above-mentioned embodiment in which the cross-member 47 constitutes the stop abutment of the levers 38, 39 for the travel limit of the rotation of the forks, avoids the need to use the jacks 41 and 42 for this function; indeed it can be appreciated that, in the absence of the above-mentioned cross-member, the travel limiting action would have to be carried out by the jacks.

Consequently the jacks can now have smaller dimensions because, as set out above, they are used only to bring the forks from the horizontal state to the vertical state and vice versa, when they are not loaded.

Naturally, variants of the invention are possible with respect to what has been described above.

For example, it can be understood that the systems for carrying out the 180° rotation and the lifting of the forks central support assembly 25, may be quite different from the one shown in the drawings; as a consequence the hollow shaft 27 with the toothed wheel 30 and the rack 31 could be replaced by other mechanisms which serve to the same purposes.

Likewise, the hydraulic cylinder 28 which lifts and lowers the assembly 25 vertically could be replaced by other equivalent means or positioned in a lower region, instead of in the upper region.

It should be emphasised, however, that the column type configuration of the entire central assembly 25 allows the means for folding the forks to be housed therein, without then leading to a significant increase in dimensions of the device as a whole.

With regard to the forks, it is also possible to have different configurations; for example, in accordance with a preferred form, the forks could be made with a base portion articulated to the pins 36 and 37, to which the arms are fixed at one side and the levers at the other.

A similar solution allows an easier mounting of the forks on the central assembly and the possibility of carrying out the maintenance of the arms or levers, without having to disassemble the articulation pins 36 and 37.

It should be also understood that the folding of the forks could be brought about downwards, instead of upwards as in the embodiment shown in the drawings; in such a case there might be changes with regard to the position of the jacks or the cross-member 47.

## Claims

1. Pallet changing device for machine tools, comprising a pair of forks (23, 24), a support assembly (25) for the forks provided with rotation means (30, 31, 32) in order to rotate about a vertical axis (V), so as to bring the forks from a pallet loading/unloading position to a work position wherein they are directed towards the machine tool and vice versa and lifting means (27, 29) for lifting and lowering the assembly (25) along the vertical axis (V) of rotation, the forks being articulated to the assembly so as to be rotatable between an operating state, in which they lie in a substantially horizontal plane, and a non-operating state in which they are folded close to the support assembly (25) **characterised in that** in the folded state close to the support assembly (25), the forks (23, 24) are located in a substantially vertical plane.

2. Device according to claim 1, wherein the forks (23, 24) are provided with levers (38, 39) which extend on the opposite side of the articulation axes thereof and on which thrust means (41, 42) act in order to bring about their folding between the operating and non-operating state.

3. Device according to claim 2, wherein the support assembly (25) comprises means (47) for stopping the folding of the forks (23, 24), against which means (47) the levers (38, 39) come into abutment when the forks reach the horizontal operating state.

4. Device according to claim 3, wherein when the levers (38, 39) come into abutment against the stop means (47), the thrust means (41, 42) do not apply a force to the levers.

5. Device according to claim 4, wherein the stop means comprises a cross-member (47) fixed to the support assembly (25) and wherein the thrust means comprises jacks (41, 42) having a movable portion (43, 44) which is connected to a respective lever (38, 39) of the forks, said portion projecting beyond the cross-member or being retracted relative thereto in order to allow the abutment of the levers against the cross-member.

6. Device according to any one of the preceding claims, wherein the forks (23, 24) comprise a base portion which is articulated to the support assembly (25) and to which the arms of the forks and the levers (38, 39) are fixed.

7. Device according to any one of the preceding claims, wherein the support assembly (25) comprises a base (35), to which the forks (23, 24) are articulated and from which a hollow shaft (27) extends upwards, suspended on a general frame (21) of the device so as to be able to be raised and lowered along the vertical axis (V).

## Patentansprüche

1. Palettenwechselvorrichtung für Bearbeitungsmaschinen, umfassend zwei Gabeln (23, 24), eine Unterstützungsanordnung (25) für die Gabeln, die mit Rotationsmitteln (30, 31, 32), damit sie um eine vertikale Achse (V) drehen, so dass sie die Gabeln von einer Palette-Lade/Entladeposition in eine Arbeitsposition bringen, in der sie in Richtung der Bearbeitungsmaschine gerichtet sind, und umgekehrt, und Anhebemitteln (27, 29) zum Heben und Senken der Vorrichtung (25) entlang der vertikalen Rotationsachse (V) ausgestattet ist, wobei die Gabeln zu der Vorrichtung so angelenkt sind, dass sie drehbar zwischen einem Betriebszustand, in welchem sie in einer im Wesentlichen horizontalen Ebene liegen, und einem Nicht-Betriebszustand sind, in welchem sie nahe an die Unterstützungsanordnung (25) gefaltet sind, **dadurch gekennzeichnet, dass** die Gabeln (23, 24), in dem gefalteten Zustand nahe an der Unterstützungsanordnung (25), in einer im Wesentlichen vertikalen Ebene liegen.

2. Vorrichtung nach Anspruch 1, bei der die Gabeln (23, 24) mit Hebeln (38, 39) ausgestattet sind, die sich auf der gegenüberliegenden Seite der Gelenkachsen davon erstrecken und auf die Schubmittel (41, 42) wirken, um deren Faltung zwischen dem Betriebszustand und Nicht-Betriebszustand zu bewirken.

3. Vorrichtung nach Anspruch 2, bei der die Unterstützungsanordnung (25) ein Mittel (47) zum Stoppen der Faltung der Gabeln (23, 24) umfasst, wobei die Hebel (38, 39) gegen das Mittel (47) in Anschlag kommen, wenn die Gabeln den horizontalen Betriebszustand erreichen.

4. Vorrichtung nach Anspruch 3, bei der die Schubmittel (41, 42) keine Kraft auf die Hebel auswirken, wenn die Hebel (38, 39) in Anschlag gegen das Stoppmittel (47) kommen.

5. Vorrichtung nach Anspruch 4, bei der das Stoppmittel ein Querelement (47) umfasst, das an der Unterstützungsanordnung (25) befestigt ist und bei der die Schubmittel Buchsen (41, 42) umfasst, die einen beweglichen Abschnitt (43, 44) aufweisen, der mit einem entsprechenden Hebel (38, 39) der Gabeln verbunden ist, wobei der Abschnitt über das Kreuzungselement hervorsteht oder relativ dazu zurückgezogen ist, um den Anschlag der Hebel gegen das Kreuzungselement zu erlauben.

6. Vorrichtung nach einem der vorhergehenden Ansprüche, bei der die Gabeln (23, 24) einen Basisabschnitt umfassen, der an die Unterstützungsanordnung (25) angelenkt ist und woran die Arme der Gabeln und die Hebel (38, 39) befestigt sind.

7. Vorrichtung nach einem der vorhergehenden Ansprüche, bei der die Unterstützungsanordnung (25) eine Basis (35) umfasst, die mit den Gabeln (23, 24) angelenkt ist und wovon sich eine hohle Achse (27) aufwärts erstreckt, die an einem allgemeinen Rahmen (21) der Vorrichtung so aufgehängt ist, dass sie entlang der vertikalen Achse (V) gehoben und gesenkt werden kann.

## Revendications

1. Dispositif de changement de palette pour machines-outils, comprenant une paire de fourches (23, 24), un ensemble de support (25) pour les fourches dotées des moyens de rotation (30, 31, 32) afin de tourner autour d'un axe vertical (V), pour amener les fourches d'une position de chargement/déchargement de palette à une position de travail dans laquelle elles sont dirigées vers la machine-outil et vice versa, des moyens de soulèvement (27, 29) pour lever et abaisser l'ensemble (25) le long de l'axe vertical (V) de rotation,
les fourches étant articulées par rapport à l'ensemble afin de pouvoir tourner entre un état de fonctionnement, dans lequel elles se positionnent dans un plan sensiblement horizontal et un état de non fonctionnement dans lequel elles sont pliées à proximité de l'ensemble de support (25), **caractérisé en ce que** à l'état plié à proximité de l'ensemble de support (25), les fourches (23, 24) sont situées dans un plan sensiblement vertical.

2. Dispositif selon la revendication 1, dans lequel les fourches (23, 24) sont dotées de leviers (38, 39) qui s'étendent sur le côté opposé des axes d'articulation et sur lesquels des moyens de poussée (41, 42) agissent afin de provoquer ce pliage entre l'état de fonctionnement et l'état de non fonctionnement.

3. Dispositif selon la revendication 2, dans lequel l'ensemble de support (25) comprend des moyens (47) pour arrêter le pliage des fourches (23, 24), contre lesquels moyens (47), les leviers (38, 39) viennent en butée lorsque les fourches atteignent l'état de fonctionnement horizontal.

4. Dispositif selon la revendication 3, dans lequel lorsque les leviers (38, 39) viennent en butée contre les moyens de butée (47), les moyens de poussée (41, 42) n'appliquent pas de force sur les leviers.

5. Dispositif selon la revendication 4, dans lequel les moyens de butée comprennent une traverse (47) fixée sur l'ensemble de support (25) et dans lequel les moyens de poussée comprennent des vérins (41, 42) ayant une partie mobile (43, 44) qui est raccordée à un levier respectif (38, 39) des fourches, ladite partie faisant saillie au-delà de la traverse ou étant rétractée par rapport à celle-ci afin de permettre la butée des leviers contre la traverse.

6. Dispositif qui ne fait référence à aucune des revendications précédentes, dans lequel les fourches (23, 24) comprennent une partie de base qui est articulée par rapport à l'ensemble de support (25), et sur laquelle les bras des fourches et les leviers (38, 39) sont fixes.

7. Dispositif qui ne fait référence à aucune des revendications précédentes, dans lequel l'ensemble de support (25) comprend une base (35), sur laquelle les fourches (23, 24) sont articulées et à partir de laquelle un arbre creux (27) s'étend vers le haut, suspendu sur un châssis général (21) du dispositif afin de pouvoir être levé et abaissé le long de l'axe vertical (V).
